# EUROPÄISCHE PATENTSCHRIFT

(11) **EP 2 350 873 B1**
(45) Veröffentlichungstag und Bekanntmachung des Hinweises auf die Patenterteilung: **29.08.2018**
(21) Anmeldenummer: 09736789.0
(22) Anmeldetag: 12.10.2009
(51) Int. Cl.: G06F 17/30, H04L 29/08

(54) **ERFASSUNG DES VISUELLEN INHALTS VON BROWSERFENSTERN**
CAPTURING THE VISUAL CONTENT OF BROWSER WINDOWS
SAISIE DU CONTENU VISUEL DE FENÊTRES DE NAVIGATEUR

(30) Priorität: 16.10.2008 CH 16332008
(43) Veröffentlichungstag der Anmeldung: 03.08.2011
(73) Patentinhaber: unblu inc., 6060 Sarnen (CH)
(72) Erfinder: TSCHÄNI, Mirko, 4055 Basel (CH); HALDIMANN, Luc, CH-4133 Pratteln (CH)
(74) Vertreter: Latscha Schöllhorn Partner AG
(86) Internationale Anmeldenummer: PCT/CH2009/000326
(87) Internationale Veröffentlichungsnummer: WO 2010/043062

(56) Entgegenhaltungen:
- EP-A- 1 022 664
- US-A1- 2007 271 283
- ESENTHER, ALAN W.: "Instant Co-Browsing: Lightweight Real-time Collaborative Web Browsing" 11TH INT. WWW CONF., HAWAII, USA, [Online] 7. Mai 2002 (2002-05-07), - 11. Mai 2002 (2002-05-11) Seiten 1-11, XP002522588 Gefunden im Internet: URL:http://www.merl.com/reports/docs/TR200 2-19.pdf> [gefunden am 2009-03-30]
- MESBAH A ET AL: "A component- and push-based architectural style for ajax applications" JOURNAL OF SYSTEMS & SOFTWARE, ELSEVIER NORTH HOLLAND, NEW YORK, NY, US, Bd. 81, Nr. 12, 11. April 2008 (2008-04-11), Seiten 2194-2209, XP025561809 ISSN: 0164-1212 [gefunden am 2008-04-11]

## Beschreibung

### Technisches Gebiet

Die Erfindung betrifft ein Verfahren gemäss dem Oberbegriff des unabhängigen Patentanspruchs 1 sowie ein Computerprogramm zum Ausführen des erfindungsgemässen Verfahrens und eine Kommunikationsvorrichtung zum Ausführen des erfindungsgemässen Verfahrens.

Solche Verfahren, bei denen mindestens eine Browser-Darstellungseinheit von einem auf einem Quellcomputer ausgeführten Browserprogramm erzeugt wird und bei denen das Browserprogramm ein Dokumentobjektmodell als Schnittstelle zum Zugriff auf mindestens ein in der Browser-Darstellungseinheit dargestelltes Dokument erzeugt, können zur Erfassung der Darstellung des in der Browser-Darstellungseinheit dargestellten Dokuments eingesetzt werden.

### Stand der Technik

Zum Auffinden, Darstellen und Bearbeiten von Informationen auf einem Computer oder einem Verbund von Computern werden häufig Browserprogramme eingesetzt, die auf dem Computer ausgeführt werden und von einem Benutzer bedient werden. Die Informationen werden typischerweise von einem Server-Dienst bereitgestellt, der beispielsweise auf einem vom Computer örtlich getrennten, über ein Kommunikationsnetzwerk mit dem Computer verbundenen Server-Computer ausgeführt wird. Damit das Browserprogramm die Informationen in einer vordefinierten Weise darstellen und bearbeiten kann, werden die Informationen dazu in einem vordefinierten Format auf dem Server-Dienst bereitgestellt. Browserprogramme weisen üblicherweise ein Darstellungsmodul auf, wobei sie die Informationen entweder rein textlich im Darstellungsmodul wiedergeben oder grafisch aufbereitet.

Mit der Ausbreitung des Internets als weltweites Kommunikationsnetzwerk hat sich insbesondere auch das World Wide Web System (WWW) weltweit etabliert. Im WWW werden Informationen von Server-Computern über das Internet für andere an das Internet angeschlossene Computer bereitgestellt, wobei die Informationen dabei so standardisiert aufbereitet sind, dass sie von einem Browserprogramm, das auf einem an das Internet angeschlossenen Computer ausgeführt wird, dargestellt und bearbeitet werden können. Das Browserprogramm ist dazu so ausgestaltet, dass es die standardisiert aufbereiteten Information beziehen, darstellen und bearbeiten kann sowie gegebenenfalls Informationen an den Server-Computer zurücksenden kann. Beispielsweise haben sich im WWW unter anderem Standards bezüglich der Übertragungsprotokolle, wie zum Beispiel das Hypertext Transfer Protocol (HTTP) oder das File Transfer Protocol (FTP), der Auszeichnungssprachen, wie zum Beispiel die Hypertext Markup Language (HTML), und der Grafikformate, wie zum Beispiel das Format Joint Photographic Experts Group (JPG) oder das Format Graphics Interchange Format (GIF), etabliert. Browserprogramme sind für eine grosse Vielfalt von Plattformen von Computern verfügbar, die jeweils von verschiedenen Parametern, wie beispielsweise dem Betriebssystem, der Hardware, der Versionierung etc., abhängig sind. Dabei sind sie für die im Wesentlichen gleichen Standards ausgestaltet, so dass die für das WWW standardisiert aufbereiteten Information im Wesentlichen plattformunabhängig bereitgestellt werden können.

Typischerweise sind im WWW bereitgestellte Informationen in aus verschiedenen Objekten zusammengesetzten Webseiten organisiert, die mittels einer Auszeichnungssprache definiert und gegliedert sein können. Ein wie oben beschriebenes Browserprogramm kann eine Interpretationseinheit aufweisen, mittels derer es eine über ein Netzwerk, zum Beispiel das Internet, bezogene Webseite auswerten kann und unter anderem auch die mittels der Auszeichnungssprache definierten Objekte gegliedert im Darstellungsmodul wiedergeben kann. Um eine verbesserte Interaktion mit einem Benutzer des Browserprogramms zu ermöglichen und um webseitenspezifische Applikationslogik im Browserprogramm durchführen zu können, haben sich im WWW auch Standards zu Skript-Programmiersprachen, wie beispielsweise JavaScript, etabliert. Die Interpretationseinheit des Browserprogramm kann typischerweise mindestens eine solche Skriptsprache umsetzen.

Mit der zunehmenden Bedeutung des WWW und der zunehmenden Komplexität der Webseiten sind die Wartung, Betreuung und Kontrolle der Webseiten sowie die Bedienbarkeit der Webseiten durch mehrere Benutzer gleichzeitig (Kollaboration) heute zunehmend wichtig. Beispielsweise ist in der Publikation "Instant Co-Browsing: Lightweight Real-Time Collaborative Web Browsing" von Alan W. Esenther (11th int. WWW conf., Hawaii, USA, 7.-11. Mai 2002, Seiten 1-11) ein System zum gemeinsamen Bearbeiten einer Webseite beschrieben, bei dem Attribute und Formularinhalte unter meheren gleichzeitig die Webseite betrachteten Personen synchronisiert werden. Für eine umfassendere Kollaboration kann es notwendig bzw. hilfreich sein, die Darstellung einer Webseite auf einem Computer zu erfassen und je nach Verwendungszeck zu übertragen und/oder aufzuzeichnen. Um beispielsweise den Benutzer einer Webseite möglichst effizient unterstützen und betreuen zu können oder auch zur Erledigung anderer Wartungs-, Betreuungs- und Kontrollaufgaben wird heute unter anderem Fernbedienungssoftware eingesetzt, mit der das Browserprogramm des Computers auf einem Kontrollcomputer dargestellt werden kann und mittels des Kontrollcomputers, beispielsweise über dessen Tastatur oder über dessen Maus, bedient werden kann. Mit solcher Fernbedienungssoftware kann zum Beispiel der Benutzer einer Seite auf seinem eigenen Computer geschult, betreut und unterstützt werden, ohne dass dazu eine betreuende Person physisch am Standort des Computers beim Benutzer der Seite anwesend sein muss.

Bekannte solche Fernbedienungssoftware ermöglicht beispielsweise die Erfassung der Darstellung einer Webseite auf einem Computer zur Fernbedienung eines Browserprogramms mittels eingebetteter Objekte, die zusammen mit der Webseite in das Browserprogramm übertragen werden. Solche eingebettete Objekte werden nicht vom Browserprogramm selbst interpretiert und/oder ausgeführt sondern von einem Drittprogramm, das über das Browserprogramm gestartet wird. Diese ebenfalls standardisierten Drittprogramme, wie beispielsweise die Java Runtime Engine (JRE) oder die ActiveX Komponenten, die ein im Wesentlichen plattformunabhängiges Ausführen von Programmen ermöglichen, müssen selbst aber im Betriebssystem des Computers installiert sein. Da aber die Installation von Drittprogrammen und insbesondere auch das Ausführen von eingebetteten Objekten mittels eines Drittprogramms teilweise sicherheitsrelevant sein kann, sind entsprechende eingebettete Objekte häufig unerwünscht und/oder unzulässig.

Beispielsweise ist im Artikel "COLLABORATIVE ENVIRONMENT FOR SUPPORTING WEB USERS" des Autors Yoshinori Aoki von der IBM Research, Tokyo Research Laboratory aus dem Jahre 2001 ein System beschrieben, bei dem eine Webseite mittels eines Proxy-Servers um eine Webseitensteuerung automatisiert erweitert wird. Diese erweiterte Webseite wird dann in einem Browserprogramm auf einem Client-Computer ausgeführt. Bei dem beschriebenen System wird auch ein Control-Panel mit einem Node-Manager in der Webseite auf den Client-Computer übertragen und über das Browserprogramm auf dem Client-Computer ausgeführt. Zur Erfassung der Darstellung der Webseite nutzt das System das vom Browserprogramm als standardisierte Schnittstelle erzeugte Dokumentobjektmodell (DOM) des Browserprogramms. Dabei erkennt die Dokumentsteuerung Events über das DOM, gibt diese an den Node-Manager weiter und steuert die Webseite über das DOM. Sowohl der Node-Manager als auch die Dokumentsteuerung sind als eingebettet Objekte in Java und mittels Skriptbefehlen in JavaScript implementiert. Aus der veröffentlichten Patentanmeldung US2007/0271283 sind Systeme und Verfahren zum Wiedergeben von Dokumenten-basierten Benutzeroberflächen-Software-Objekten bekannt. Benutzerschnittstellen-Softwareobjekte können in einem Dokumentobjektmodell auf einem ersten Computersystem dargestellt werden. Diese Objekte können dann an ein zweites Computersystem übermittelt werden, auf dem sie in ähnlicher Weise durch Verwendung eines Dokumentobjektmodells auf einem zweiten Computersystem gerendert werden. Ein Dokument auf dem ersten Computersystem kann auch aktualisiert werden, um entweder die Benutzereingabe durch ein in dem Dokument enthaltenes Benutzerschnittstellen-Softwareobjekt oder durch serverseitige Logik induzierte Änderungen widerzuspiegeln. Die Aktualisierungen können dann inkrementell an dem zweiten Computersystem übermittelt und dort wiedergegeben werden. Neben der oben erwähnten zwingendermassen durchzuführenden aber oft unerwünschten Installation des Drittprogramms auf dem Client-Computer muss beim automatisierten Zufügen der Webseitensteuerung mittels des Proxy-Servers beim oben beschriebenen System berücksichtigt werden, dass die Komponenten von Webseiten, die für kritische Applikationslogik zuständig sind, nicht dupliziert werden oder an falscher Stelle oder zu einem falschen Zeitpunkt ausgeführt werden. Beispielsweise bei einer Online-Banking-Anwendung, die mittels einer Webseite ausgeführt wird, besteht das Risiko, dass kritische Funktionalität der Applikationslogik, wie unter anderem buchungsrelevante Funktionalität, auf einen weiteren Computer übertragen wird und dort ausgeführt wird. Das kann zu Fehlbuchungen und/oder zu einem Abbruch der Online-Banking-Anwendung führen. Um dies zu verhindern, kann die Webseitensteuerung so ausgestaltet sein, dass kritische Applikationslogik erkannt wird und entweder nicht oder in abgeänderter Form vom Client-Computer zum weiteren Computer übertragbar ist. Dazu muss der Proxy-Server auf entsprechende Webseiten angepasst ausgestaltet sein, so dass die Webseitensteuerung nicht generisch einer beliebigen Webseite zugefügt werden kann.

Aufgabe der nachfolgenden Erfindung ist es daher, ein Verfahren zur Erfassung der Darstellung einer in einem Browser-Darstellungsmodul dargestellten Webseite vorzuschlagen, mit dem eine generische automatisierte Erfassung beliebiger Webseiten unabhängig von deren Applikationslogik möglich ist.

### Darstellung der Erfindung

Die Aufgabe wird erfindungsgemäss durch ein Verfahren gelöst, wie es durch die Merkmale des unabhängigen Patentanspruchs 1 charakterisiert ist. Vorteilhafte Ausgestaltungen des erfindungsgemässen Verfahrens ergeben sich aus den Merkmalen der abhängigen Patentansprüche.

Das Wesen der Erfindung besteht im Folgenden: In einem Verfahren zur Erfassung der Darstellung mindestens eines in mindestens einer Browser-Darstellungseinheit dargestellten Dokuments wird die Browser-Darstellungseinheit von einem auf einem Quellcomputer ausgeführten Browserprogramm erzeugt. Das Browserprogramm erzeugt ein Dokumentobjektmodell als Schnittstelle zum Zugriff auf das in der Browser-Darstellungseinheit dargestellte Dokument. Dabei werden Darstellungsobjekte des Dokumentobjektmodells, die für die Darstellung des Dokuments in der Browser-Darstellungseinheit relevant sind, mindestens teilweise in einer vordefinierten Datenstruktur erfasst. Ebenfalls wird das Dokumentobjektmodell überwacht, so dass Änderungen der Darstellungsobjekte des Dokumentobjektmodells erfasst werden.

Unter "Browser-Darstellungseinheit" wird hier beispielsweise ein Browserfenster, ein Frame eines Browserfensters oder auch ein virtuelles Browserfenster bzw. ein virtueller Frame eines headless Browserprogramms verstanden. Dabei wird hier unter "headless Browserprogramm" ein Browserprogramm verstanden, das keine echte für einen Benutzer ersichtliche grafische Ausgabe erzeugt und beispielsweise auf einem Server-Computer ausgeführt wird. Weiter werden hier unter "Frames" alle möglichen Arten von Browserframes inklusive iFrames verstanden. Das vom Browserprogramm erzeugte Dokumentobjektmodell kann beispielsweise das durch das World Wide Web Consortium (W3C) definierte Document Object Model (DOM) sein. Das DOM ermöglicht einen Zugriff auf ein oder mehrere Dokumente, die in einem oder mehreren Browser-Darstellungseinheiten dargestellt werden, beispielsweise in einem Browserfenster oder in mehreren Frames oder auch in mehreren Browserfenstern.

Die in der Datenstruktur erfassten Darstellungsobjekte werden hier beschreibend auch als "Visual" bzw. als "DOM-Shot" bezeichnet. Je nach Einsatzgebiet des erfindungsgemässen Verfahrens kann es auch zweckmässig sein, nur einen Teil der für die Darstellung des Dokuments in der Browser-Darstellungseinheit relevanten Darstellungsobjekte in der Datenstruktur zu erfassen, was dann beschreibend als "partielles Visual" bezeichnet wird. Ein (partielles) Visual ist baumartig strukturiert aufgebaut, insbesondere beispielsweise ähnlich dem DOM Knoten mit Attributen und einer geordneten Liste von Kindknoten mit entsprechenden Attributen umfassend. Unter "Darstellungsobjekte" werden hier alle für die Darstellung eines Dokuments wesentlichen Objekte und Informationen verstanden, beispielsweise grafische Objekte und deren Ausgestaltung, Ereignissteuerungen (Event Handler) sowie Informationen über das Browserfenster und dessen Ausgestaltung. Dabei werden beim erfindungsgemässen Verfahren andere Objekte, die nicht Darstellungsobjekte sind, gezielt nicht in der Datenstruktur erfasst. Diese anderen Objekte können in beispielsweise alle beziehungsweise bestimmte Skriptobjekte oder bestimmte eingebettete Objekte umfassen.

Die Erfassung der Änderungen der Darstellungsobjekte kann erfolgen, indem ein weiteres (partielles) Visual erzeugt wird oder indem die Differenz zwischen dem weiteren Visual und dem vorherigen Visual erfasst wird, was hier als "inkrementelles Visual" bezeichnet wird (siehe unten). Die Überwachung des Dokumentobjektmodells kann unter anderem Ereignis getrieben ausgeführt werden oder Benutzer getrieben oder periodisch (siehe unten). Beispielsweise können alle oder bestimmte der standardisiert vordefinierten Ereignissteuerungen (Event Handler) mindestens eines Dokuments abgefangen werden, wodurch dann ein entsprechendes (partielles oder inkrementelles) Visual erzeugt werden kann. Oder ein Benutzer des Browserprogramms kann aktiv die Erzeugung eines Visuals beispielsweise durch Betätigung eines entsprechenden Buttons auslösen.

Das erfindungsgemässe Verfahren ermöglicht eine automatisierte effiziente generische Erfassung der Darstellung eines mittels eines Browserprogramms dargestellten Dokuments, beispielsweise einer Webseite. Dabei kann das erfindungsgemässe Verfahren auch einen effizienten Betrieb verschiedener Anwendungen erlauben. Beispielsweise kann das Verfahren in einer Anwendung zur Fernsteuerung oder statistischen Auswertung einer durch im Browserprogramm ausgeführten Webanwendung eingesetzt werden. Dabei können bestimmte Teile der Webanwendung, beispielsweise eine oder mehrere Webseiten, automatisiert zur Durchführung des Verfahrens erweitert werden, so dass die Darstellungen der erweiterten Webseiten erfasst werden können. Die dabei erzeugten (partiellen bzw. inkrementellen) Visuals können auf einen weiteren Computer übertragen werden, auf dem sie z.B. zu Auswertungszwecken gespeichert werden können oder auf dem sie in einem weiteren Browserprogramm dargestellt werden können. Dabei ermöglicht das erfindungsgemässe Verfahren einerseits, dass die Erweiterung der Webseiten generisch, d.h. unabhängig von in den Webseiten enthaltener Applikationslogik, erfolgen kann und andererseits, dass die Applikationslogik nur an einer Stelle, d.h. im originalen Browserprogramm, ausgeführt werden kann.

In einem anderen Beispiel kann das erfindungsgemässe Verfahren in einer Anwendung zum serverseitigen browsen eingesetzt werden. Dabei können beliebige Webseiten entsprechend erweitert werden und mittels eines auf einem Server-Computer ausgeführten Browserprogramms dargestellt werden. Dieses Browserprogramm kann dabei beispielsweise ein headless Browserprogramm sein. Über die auf dem Server-Computer erzeugten Visuals können die Webseiten in einem Browserprogramm auf einem oder mehreren Client-Computern dargestellt werden. Dadurch können mehrere Benutzer an verschiedenen Client-Computern gleichzeitig mit einer einzigen Webanwendung arbeiten (Kollaboration). Die Applikationslogik wird dabei immer jeweils über den Server-Computer ausgeführt, so dass alle Benutzer die gleiche Funktionalität nutzen können und auch in Echtzeit verfolgen können, welche Bearbeitungen andere Benutzer mittels der Webanwendung vollziehen. Dabei ermöglicht das erfindungsgemässe Verfahren wiederum, dass die Erweiterung der Webseiten generisch, d.h. unabhängig von in den Webseiten enthaltener Applikationslogik, erfolgen kann und, dass die Applikationslogik nur an einer Stelle, d.h. im Browserprogramm des Server-Computers, ausgeführt werden kann.

In einem weiteren anderen Beispiel kann das erfindungsgemässe Verfahren in einer anderen Anwendung zum serverseitigen browsen eingesetzt werden. Dabei können wie oben beschrieben bestimmte Teile der Webanwendung, beispielsweise eine oder mehrere Webseiten, automatisiert zur Durchführung des Verfahrens erweitert werden und mittels eines auf einem Server-Computer ausgeführten Browserprogramms dargestellt werden. Dieses Browserprogramm kann dabei beispielsweise ein headless Browserprogramm sein. Über die auf dem Server-Computer erzeugten Visuals können die Webseiten in einem Browserprogramm auf einen oder mehrere Client-Computer dargestellt werden. Da auch in diesem Beispiel die Applikationslogik auf dem Server-Computer ausgeführt wird und auf dem Client-Computer lediglich die grafische Repräsentation der Webseite dargestellt wird, können die technischen Voraussetzungen an den Client-Computer verhältnismässig niedrig gehalten werden. Dies ermöglicht einen verhältnismässig reibungslosen Einsatz von verhältnismässig anspruchsvollen Webseiten auf einem verhältnismässig leistungsschwachen Client-Computer, der beispielsweise ein Handheld-Computer, ein Thin-Client oder ein Mobiltelefon sein kann. Dabei ermöglicht das erfindungsgemässe Verfahren wiederum, dass die Erweiterung der Webseiten generisch, d.h. unabhängig von in den Webseiten enthaltener Applikationslogik, erfolgen kann und, dass die Applikationslogik nur an einer Stelle, d.h. im Browserprogramm des Server-Computers, ausgeführt werden kann.

Vorzugsweise wird beim erfindungsgemässen Verfahren das Dokumentobjektmodell überwacht, indem es periodisch auf Änderungen seiner Darstellungsobjekte geprüft wird. Diese periodische Überprüfung kann bei verhältnismässig statischen Webseiten beispielsweise alle zwei Sekunden ausgeführt werden und bei verhältnismässig dynamischen Webseiten, wie z.B. Webseiten mit animierten Elementen, alle 50 bis 200 Millisekunden. Eine solche periodische Überprüfung ermöglicht eine verhältnismässig einfache Implementierung einer zweckmässigen Überprüfung im erfindungsgemässen Verfahren.

Mit Vorteil wird dabei das Dokumentobjektmodell überwacht, indem es bei einem bestimmten Ereignis auf Änderungen seiner Darstellungsobjekte geprüft wird. Gewisse Ereignisse der Webseite könne so abgefangen werden und für die Initiierung der Überprüfung des Dokumentobjektmodells genutzt werden. Die Ereignisse können beispielsweise die Event Handler des durch das W3C definierten standardisierten DOMs sein, wobei auch nur gewisse Event Handler unter bestimmten Bedingungen verwendet werden können. Eine solche ereignisgetriebene Überprüfung ermöglicht eine verhältnismässig einfache Implementierung einer zielgesteuerten Überprüfung im erfindungsgemässen Verfahren. Die beiden beschriebenen Arten von Überprüfungen können vorzugsweise auch kombiniert werden.

Bevorzugt wird beim erfindungsgemässen Verfahren das Dokument vor einer Übertragung auf den Quellcomputer um eine Dokumentsteuerung zur Erfassung der Darstellungsobjekte des Dokumentobjektmodells und zur Überwachung des Dokumentobjektmodells erweitert. Dabei kann die Übertragung auf den Quellcomputer auf beliebige Art und Weise erfolgen, beispielsweise von einem Webserver aus über das Internet. Die Erweiterung des Dokuments kann das Einbauen von Skriptbefehlen umfassen, das Ersetzen von bestehenden Objekten sowie beliebige andere geeignete Massnahmen. Sie kann beispielsweise dokumentweise (semi-)manuell oder auch automatisiert vollzogen werden. Indem das Dokument vor dem Übertragen auf den Quellcomputer erweitert wird, kann gewährleistet werden, dass das Dokument auf allen angeschlossenen Quellcomputer in erweiterter Form zur Verfügung steht, was insbesondere von Vorteil sein kann, wenn zahlreiche Quellcomputer auf ein Dokument zugreifen können. Ausserdem kann so die Erweiterung des Dokuments unter vorgegebenen Bedingungen zentral an einer Stelle erfolgen.

Vorzugsweise wird dabei das Dokument vor einer Übertragung auf den Quellcomputer von einem Proxy-Dienst automatisiert um die Dokumentsteuerung erweitert. Der Proxy-Dienst kann dabei funktionell zwischen dem Webserver und dem Quellcomputer angeordnet sein. Damit wird ermöglicht, dass das Dokument unabhängig von der späteren Erfassbarkeit der Darstellungsobjekte des Dokumentobjektmodells ausgestaltet werden kann. Insbesondere wird damit ermöglicht, dass beim Erstellen des Dokuments, beispielsweise durch einen Webdesigner, keine Aspekte der späteren Erfassung der Darstellungsobjekte des Dokumentobjektmodells mitberücksichtigt werden müssen. Das Dokument wird nachdem es erstellt und gestaltet ist, beispielsweise auf einem Webserver bereitgestellt. Wird es von einem Quellcomputer auf dem Webserver angefragt, so wird es via den Proxy-Dienst erweitert und auf den Quellcomputer übertragen. Eine solche automatisierte Erweiterung des Dokuments mittels eines Proxy-Diensts ermöglicht eine generische Erweiterung von Dokumenten, so dass die Gestaltung des Dokuments von der Erweiterung getrennt werden kann. Dies ermöglicht eine verhältnismässig komfortable Erstellung und Bewirtschaftung des Dokuments. Weiter wird dadurch eine verhältnismässig einfache Aktualisierung, Wartung und Anpassung der Erweiterung an einer zentralen Stelle ermöglicht.

Mit Vorteil weist dabei das Browserprogramm eine Skriptinterpretationseinheit auf und die Dokumentsteuerung besteht vollständig aus durch die Skriptinterpretationseinheit ausführbaren Skriptbefehlen. Damit wird ermöglicht, dass auf dem Quellcomputer keine Drittprogramme zur Interpretation des Dokuments, wie beispielsweise die Java Runtime Engine, installiert sein müssen. Dies kann aus sicherheitstechnischen Gründen vorteilhaft sein oder dazu beitragen, die technischen Anforderungen an die Leistungsfähigkeit des Quellcomputers tief zu halten.

Vorzugswiese werden die Änderungen der Darstellungsobjekte des Dokumentobjektmodells inkrementell erfasst. Dazu können jeweils nur Informationen zu geänderten Darstellungsobjekten beispielsweise in einem inkrementellen Visual erfasst werden, die dann in Abhängigkeit zu den in der vordefinierten Datenstruktur erfassten Darstellungsobjekten (Visual bzw. partielles Visual) stehen. Ein solches Erfassen der Änderungen der Darstellungsobjekte des Dokumentobjektmodells ermöglicht es, dass dafür nicht jeweils ganze (partielle) Visuals übertragen und gegebenenfalls gespeichert oder dargestellt werden müssen sondern nur Bruchteile davon. Damit kann die Erfassung der Darstellung des Dokuments bezüglich der Datenmenge verhältnismässig kompakt ausgestaltet sein, so dass verhältnismässig wenig Speicher und Rechenleistung bei der Darstellung und Speicherung benötigt wird sowie so dass verhältnismässig wenig Bandbreite bei dessen Übertragung benötigt wird. Ein inkrementelles Visual kann zum Beispiel eine geordnete Liste von Änderungsanweisungen umfassen. Solche Änderungsanweisungen könnten zum Beispiel das Hinzufügen eines Knotens, die Entfernung eines Knotens oder die Änderung eines Attributs beinhalten. Jede Änderungsanweisung hat dabei einen Zielknoten, welcher zum Beispiel über eigens dafür vergebene Identifikationen oder über eine Pfadangabe identifiziert werden kann. Ein inkrementelles Visual dient dazu, ein volles erstes (partielles) Visual, so zu modifizieren, dass es danach identisch zu einem vollen zweiten (partiellen) Visual ist. Wird das volle erste (partielle) Visual bereits in einem Browser-Fenster dargestellt, so kann das inkrementelle Visual auch direkt im Browserprogramm durch Manipulationen des DOM angewandt werden. Dadurch kann das inkrementelle Visual sehr effizient auf ein Abbild in einem Zielbrowserprogramm übertragen werden.

Vorzugsweise wird beim erfindungsgemässen Verfahren die erfasste Datenstruktur auf einen weiteren Computer übertragen und auf diesem gespeichert. Der weitere Computer kann beispielsweise ein Server-Computer beispielsweise des WWW sein oder ein Zielcomputer beispielsweise in einem Peer to Peer Netzwerk über das Internet. Eine solche Speicherung ermöglicht beispielsweise ein Aufzeichnen oder Archivieren der Benutzung des Dokuments, womit beispielsweise das Benutzerverhalten analysiert werden kann oder Statistiken zum Dokument generiert werden können.

Mit Vorteil wird dabei aus zu verschiedenen Zeitpunkten erfassten Datenstrukturen die Änderungen der Darstellungsobjekte des Dokumentobjektmodells inkrementell erfasst und auf dem weiteren Computer gespeichert. Diese inkrementelle Erfassung der Änderungen von zwei (partiellen) Visuals eines Dokuments kann entweder vor der Übertragung des (partiellen) Visuals auf dem Quellcomputer erfolgen oder nach der Übertragung des (partiellen) Visuals auf dem weiteren Computer. Eine solche Erfassung der Unterschiede eines Dokuments zu zwei verschiedenen Zeitpunkten ermöglicht eine Reduktion des Speicherbedarfs im Vergleich zur Speicherung von zwei vollen (partiellen) Visuals.

Vorzugsweise wird dabei zu einem ersten Zeitpunkt eine erste Datenstruktur zu einem ersten Dokument erfasst und zu einem zweiten Zeitpunkt eine zweite Datenstruktur zu einem zweiten Dokument, wobei die Unterschiede zwischen der ersten Datenstruktur und der zweiten Datenstruktur inkrementell erfasst und auf dem weiteren Computer gespeichert werden. Damit können zwei unabhängige Dokumente in einen dynamischen Benutzungszusammenhang gestellt werden. Eine solche Erfassung von Unterschieden zweier verschiedener Dokumente kann insbesondere bei ähnlichen Dokumenten zu einer Reduktion des Speicherbedarfs führen im Vergleich zur Speicherung von einem vollen (partiellen) Visual zum ersten Dokument und einem vollen (partiellen) Visual zum zweiten Dokument.

Mit Vorteil werden die in der Datenstruktur erfassten Darstellungsobjekte und die erfasste Änderungen der Darstellungsobjekte auf einen Zielcomputer übertragen, auf dem sie zur Darstellung einer dem Dokument entsprechenden Dokumentkopie in einer von einem Ziel-Browserprogramm erzeugten Ziel-Browser-Darstellungseinheit dargestellt werden. Damit kann eine Fernüberwachung des Dokuments und seiner Benutzung auf dem Quellcomputer ermöglicht werden, was beispielsweise für eine Fernunterstützung des Benutzers eingesetzt werden kann.

Vorzugsweise werden dabei die in der Datenstruktur erfassten Darstellungsobjekte und die erfassten Änderungen der Darstellungsobjekte vor dem Übertragen auf den Zielcomputer in einem Pufferspeicher zwischengespeichert. Damit kann insbesondere bei häufigen Modifikationen des Dokuments wie beispielsweise bei animierten Objekten eine flüssige Reproduktion beispielsweise auf dem Zielcomputer ermöglicht werden.

Dabei wird mit Vorteil ein Dokumentkopieobjektmodell überwacht, indem es bei einem bestimmten Ereignis auf Änderungen seiner Darstellungsobjekte geprüft wird, so dass Änderungen der Zieldarstellungsobjekte des Dokumentkopieobjektmodells, die für die Darstellung der Dokumentkopie in der Ziel-Browser-Darstellungseinheit relevant sind, erfasst und auf den Quellcomputer übertragen werden. Damit kann die oben beschriebene Fernüberwachung zu einer Fernsteuerung des Dokuments und seiner Benutzung auf dem Quellcomputer erweitert werden, was beispielsweise für eine komfortablere Fernunterstützung des Benutzers eingesetzt werden kann.

Vorzugsweise werden eine aus dem in der Browser-Darstellungseinheit dargestellten Dokument erzeugte Übertragungsanfrage und deren Antwort erfasst, wobei die Antwort für eine entsprechende aus der in der Ziel-Browser-Darstellungseinheit dargestellten Dokumentkopie erzeugte Übertragungsanfrage verwendet wird. Die über die Dokumentkopie erzeugte Übertragungsanfrage kann die gleiche oder eine ähnliche angepasste wie die über das Dokument erzeugte Übertragungsanfrage sein. Dokumente insbesondere Webseiten können auch Anfragen auf Objekte wie beispielsweise Bilder oder Datenbankabfragen als Übertragungsanfragen enthalten (HTTP-Requests). Diese Übertragungsanfragen werden jeweils nach oder während der Darstellung des Dokuments in der Browser-Darstellungseinheit beantwortet, indem die angefragten Objekte nachgeladen werden. Dadurch kann eine verhältnismässig flexible und einfache Pflege und Aktualisierung dieser Objekte ermöglicht werden. Indem im erfindungsgemässen Verfahren auch solche Übertragungsanfragen und deren Antworten erfasst werden, kann beispielsweise eine Wiedergabe des Dokuments zu seinem Benutzungszeitpunkt erreicht werden, auch wenn die angefragten Objekte später geändert wurden, ohne dass das Dokument selbst geändert wurde.

Ein weiterer Aspekt der Erfindung betrifft ein Computerprogramm, das Mittel zur Durchführung des beschriebenen Verfahrens umfasst. Ein solches Computerprogramm kann beispielsweise eine Komponente umfassen, mit der ein über eine Webdesign-Software erstellte Webseite automatisiert erweitert werden kann, was beispielsweise als Plugin zur Webdesign-Software implementiert sein kann. Oder es kann eine Proxy-Dienst Komponente umfassen, mittels der Webseiten bei der Anfrage von einem Quellcomputer aus laufend vor der Übertragung auf den Quellcomputer erweitert werden.

Ein anderer weiterer Aspekt der Erfindung betrifft eine Kommunikationsvorrichtung, die Mittel zur Durchführung des beschriebenen Verfahrens umfasst.

### Kurze Beschreibung der Zeichnungen

Weitere vorteilhafte Ausgestaltungen der Erfindung ergeben sich aus der nachfolgenden Beschreibung von Ausführungsbeispielen der Erfindung mit Hilfe der schematischen Zeichnung.
- Fig. 1: ein Funktionsschema eines Ausführungsbeispiels des erfindungsgemässen Verfahrens; und
- Fig. 2: ein Funktionsschema des Verfahrens von Fig. 1 mit einem Proxy-Dienst bezüglich der Darstellung einer Webseite; und
- Fig. 3: ein Funktionsschema des Verfahrens von Fig. 2 bezüglich der Darstellung einer Webseitenkopie.

### Weq(e) zur Ausführung der Erfindung

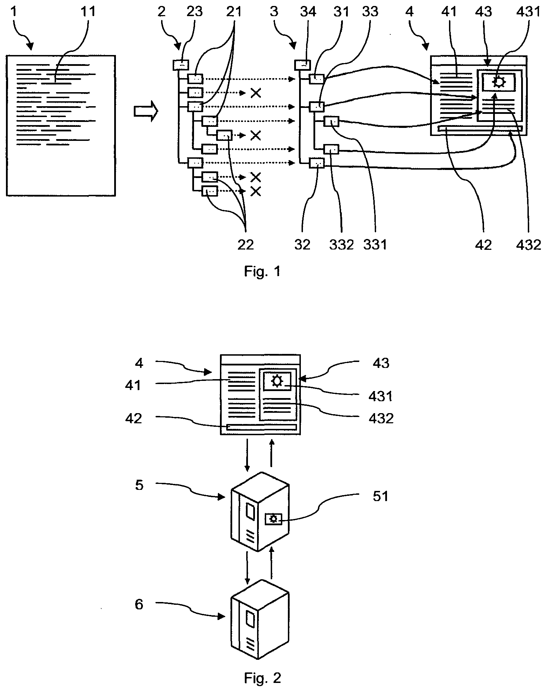

In Fig. 1 ist ein Ausführungsbeispiel des erfindungsgemässen Verfahrens gezeigt, bei dem eine Webseite 1 als Dokument in ein Browserprogramm auf einen Quellcomputer übertragen wird. Die Webseite 1 umfasst verschiedene Objekte, die mittels HTML 11 als Auszeichnungssprache (Markup) definiert sind. Das Browserprogramm erzeugt aus den in der Webseite definierten Objekten ein DOM 2 als Dokumentobjektmodell und stellt die Webseite 1 in einem Browserfenster 4 als Browser-Darstellungseinheit strukturiert dar. Das DOM 2 weist baumartig gegliederte Objekte auf, die ein Wurzelobjekt 23, mehrere visuelle Objekte 21 als für die Darstellung der Webseite 1 im Browserfenster 4 relevante Objekte und mehrere nichtvisuelle Objekte 22 als für die Darstellung der Webseite im Browserfenster 4 nicht relevante Objekte auf. Die visuellen Objekte 21 können beispielsweise Texte, Bilder, Animationen, Ereignissteuerungen (Event Handler) oder Ähnliches umfassen und die nichtvisuellen Objekte 22 können beispielsweise aus Skriptbefehlen (JavaScript) bestehende Skriptfunktionen, versteckte Formularfelder, sonstige versteckte Objekte oder Ähnliches umfassen.

Die Webseite 1 wird vor der Übertragung auf den Quellcomputer um aus JavaScript-Befehlen bestehende Skriptfunktionen als Dokumentsteuerung erweitert, die die visuellen Objekte 21 des DOMs 2 in einem Visual 3 erfassen. Das Visual 3 ist beispielhaft baumartig gegliedert und umfasst ein Wurzelobjekt 34, ein Textobjekt 31, ein Tabellenobjekt 32 sowie ein ein Bildobjekt 331 und ein Textobjekt 332 aufweisendes Frameobjekt 43. Das Visual 3 enthält alle visuellen Elemente, die bei der Darstellung der Webseite 1 im Browserfenster 4 verwendet werden. Entsprechend ist die Webseite 1 im Browserfenster 4 beispielhaft mit einem Text 41, einem Tabellenobjekt 42 sowie einem ein Bild 431 und einen Text 432 aufweisenden Frame 43 dargestellt.

Mittels der Scriptfunktionen wird das DOM 2 periodisch auf Änderungen an seinen visuellen Objekten 21 geprüft. Zusätzlich wird das DOM 2 mittels der Scriptfunktionen beim Auslösen bestimmter Ereignissteuerungen (Event Handler) des DOMs 2 auf Änderungen an seinen visuellen Objekten 21 geprüft. Werden bei einer solchen Überprüfung entsprechende Änderungen festgestellt, so wird mittels der Scriptfunktionen ein weiteres Visual erzeugt. Alternativ dazu können dabei auch nur die geänderten visuellen Objekte 21 des DOMs in einem inkrementellen Visual erfasst werden.

In einem anderen Ausführungsbeispiel des erfindungsgemässen Verfahrens können die Skriptfunktionen auch nur einen Teil der visuellen Objekte 21 des DOMs 2 in einem partiellen Visual erfassen. Beispielsweise könnte ein solches partielles Visual ebenfalls baumartig gegliedert sein aber lediglich die im Frame 41 dargestellten visuellen Elemente der Darstellung der Webseite 1 im Browserfenster 4 umfassen, also lediglich das Bildobjekt 331 und das Textobjekt 332.

Für die gesamte weitere Beschreibung gilt folgende Festlegung. Sind in einer Figur zum Zweck zeichnerischer Eindeutigkeit Bezugszeichen enthalten, aber im unmittelbar zugehörigen Beschreibungstext nicht erwähnt, so wird auf deren Erläuterung in einer vorangehenden Figurenbeschreibung Bezug genommen.

In Fig. 2 ist eine mögliche Implementierung des erfindungsgemässen Verfahrens gezeigt, wobei die Webseite 1 auf einem Web-Server 6 des WWW für den Zugriff über das Internet bereitgestellt ist. Wie durch die Pfeile angedeutet wird die Webseite 1 von einem auf einem Quellcomputer ausgeführten Browserprogramm über einen Proxy-Server 5 auf dem Web-Server 6 angefordert. Die Webseite 1 wird darauf in einem ersten Schritt vom Web-Server 6 auf den Proxy-Server 5 übertragen. Auf dem Proxy-Server 5 wird ein Proxy-Dienst 51 ausgeführt, der die Webseite 1 automatisiert um aus JavaScript-Befehlen bestehenden Skriptfunktionen als Dokumentsteuerung erweitert, mittels derer die Darstellung der Webseite 1 im Browserfenster 4 des Quellcomputers und deren Änderungen erfasst werden können.

Werden mittels der Scriptfunktionen festgestellte Änderungen an den visuellen Objekten 21 des DOMs 2 erfasst, so wird das entsprechende weitere Visual beziehungsweise das inkrementelle Visual auf den Proxy-Server 5 übertragen und je nach Konfiguration des Proxy-Dienstes 51 gespeichert oder an einen Zielcomputer weitergeleitet. Weiter werden in der Webseite 1 enthaltene HTTP-Requests als Übertragungsanfragen über den Proxy-Server 5 auf dem Web-Server 6 angefordert. Diese HTTP-Requests beziehungsweise diesen HTTP-Requests entsprechende angepasste HTTP-Requests sowie auch deren Antworten werden ebenfalls zusammen mit dem Visual 2 erfasst.

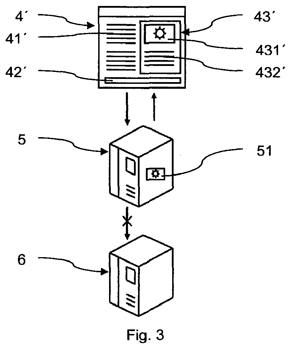

Wie in Fig. 3 gezeigt wird eine Anfrage zur Darstellung der im Browserfenster 4 auf dem Quellcomputer dargestellten Webseite 1 auf einem Zielcomputer, beispielsweise zur Fernüberwachung oder Fernsteuerung der auf dem Quellcomputer dargestellten Webseite 1, mittels des Visuals 2 eine Webseitenkopie auf den Zielcomputer übertragen und dort in einem von einem Ziel-Browserprogramm erzeugten Ziel-Browserfenster 4' als Ziel-Browser-Darstellungseinheit dargestellt. Im Ziel-Browserfenster 4' werden dann die visuellen Elemente der Webseitenkopie korrespondierend zur Webseite mit einem Text 41', einer Tabelle 42' sowie einem ein Bild 431' und einen Text 432' aufweisenden Frame 43' dargestellt. Da das Visual 2 die nichtvisuellen Objekte 22 der Webseite 1 nicht enthält, ist so gewährleistet, dass keine unerwünschte Funktionalität der Webseite 1 auch über die Webseitenkopie ausgeführt werden kann. Ebenfalls werden den HTTP-Requests der Webseite 1 entsprechende HTTP-Requests in der Webseitenkopie auf den Zielcomputer übertragen und die entsprechenden Antworten werden vom Proxy-Server 5 aus auf den Zielcomputer übertragen. Ein Zugriff vom Zielcomputer auf den Web-Server 6 ist dazu nicht notwendig.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Es versteht sich, dass Fachleute Änderungen und Abwandlungen machen können, ohne den Umfang und den Geist der folgenden Ansprüche zu verlassen. Insbesondere umfasst die Erfindung ebenfalls Ausführungsformen mit jeglicher Kombination von Merkmalen, die vorstehend oder nachfolgend zu verschiedenen Ausführungsformen genannt oder gezeigt sind. Die Erfindung umfasst ebenfalls einzelne Merkmale in den Figuren auch wenn sie dort im Zusammenhang mit anderen Merkmalen gezeigt sind und/oder vorstehend oder nachfolgend nicht genannt sind.

Im Weiteren schließt der Ausdruck "umfassen" und Ableitungen davon andere Elemente oder Schritte nicht aus. Ebenfalls schließt der unbestimmte Artikel "ein" bzw. "eine" und Ableitungen davon eine Vielzahl nicht aus. Die Funktionen mehrerer in den Ansprüchen aufgeführter Merkmale können durch eine Einheit erfüllt sein. Ein Computerprogramm kann auf einem geeigneten Medium gespeichert sein und/oder vertrieben werden, wie beispielsweise auf einem optischen Speichermedium oder einem Festmedium, das zusammen mit oder als Teil von anderer Hardware bereitgestellt wird. Es kann auch in anderer Form vertrieben werden, wie beispielsweise über das Internet oder andere verkabelte oder unverkabelte Telekommunikationssysteme. Alle Bezugszeichen in den Ansprüchen sind nicht als den Umfang der Ansprüche einschränkend zu verstehen.

## Patentansprüche

1. Verfahren zur Erfassung der Darstellung mindestens eines in mindestens einer Browser-Darstellungseinheit (4) dargestellten Dokuments (1), wobei die Browser-Darstellungseinheit (4) von einem auf einem Quellcomputer ausgeführten Browserprogramm erzeugt wird und das Browserprogramm ein Dokumentobjektmodell (2) als Schnittstelle zum Zugriff auf das in der Browser-Darstellungseinheit (4) dargestellte Dokument (1) erzeugt, **dadurch gekennzeichnet, dass** Darstellungsobjekte (21) des Dokumentobjektmodells (2), die für die Darstellung des Dokuments (1) in der Browser-Darstellungseinheit (4) relevant sind, mindestens teilweise in einer vordefinierten, baumartig strukturiert aufgebauten Datenstruktur (3), die Knoten mit Attributen und eine geordnete Liste von Kindknoten mit entsprechenden Attributen umfasst, erfasst werden, wobei andere Objekte, die nicht Darstellungsobjekte (21) des Dokumentobjektmodells (2) sind, gezielt nicht in der Datenstruktur (3) erfasst werden, und dass das Dokumentobjektmodell (2) überwacht wird, so dass Änderungen der Darstellungsobjekte (21) des Dokumentobjektmodells (2) erfasst werden.

2. Verfahren nach Anspruch 1, bei dem das Dokumentobjektmodell (2) überwacht wird, indem es periodisch auf Änderungen seiner Darstellungsobjekte (21) geprüft wird.

3. Verfahren nach Anspruch 1 oder 2, bei dem das Dokumentobjektmodell (2) überwacht wird, indem es bei einem bestimmten Ereignis auf Änderungen seiner Darstellungsobjekte (21) geprüft wird.

4. Verfahren nach einem der vorangehenden Ansprüche, bei dem das Dokument (1) vor einer Übertragung auf den Quellcomputer um eine Dokumentsteuerung zur Erfassung der Darstellungsobjekte (21) des Dokumentobjektmodells (2) und zur Überwachung des Dokumentobjektmodells (2) erweitert wird.

5. Verfahren nach Anspruch 4, bei dem das Dokument (1) vor einer Übertragung auf den Quellcomputer von einem Proxy-Dienst (51) automatisiert um die Dokumentsteuerung erweitert wird.

6. Verfahren nach Anspruch 4 oder 5, bei dem das Browserprogramm eine Skriptinterpretationseinheit aufweist und die Dokumentsteuerung vollständig aus durch die Skriptinterpretationseinheit ausführbaren Skriptbefehlen besteht.

7. Verfahren nach einem der vorangehenden Ansprüche, bei dem die Änderungen der Darstellungsobjekte (21) des Dokumentobjektmodells (2) inkrementell erfasst werden.

8. Verfahren nach einem der vorangehenden Ansprüche, bei dem die erfasste Datenstruktur (3) auf einen weiteren Computer übertragen und auf diesem gespeichert wird.

9. Verfahren nach Anspruch 8, bei dem aus zu verschiedenen Zeitpunkten erfassten Datenstrukturen (3) die Änderungen der Darstellungsobjekte (21) des Dokumentobjektmodells (2) inkrementell erfasst und auf dem weiteren Computer gespeichert werden.

10. Verfahren nach Anspruch 8 oder 9, bei dem zu einem ersten Zeitpunkt eine erste Datenstruktur (3) zu einem ersten Dokument (1) erfasst wird und zu einem zweiten Zeitpunkt eine zweite Datenstruktur zu einem zweiten Dokument, wobei die Unterschiede zwischen der ersten Datenstruktur (3) und der zweiten Datenstruktur inkrementell erfasst und auf dem weiteren Computer gespeichert werden.

11. Verfahren nach einem der vorangehenden Ansprüche, bei dem die in der Datenstruktur (3) erfassten Darstellungsobjekte (21) und die erfasste Änderungen der Darstellungsobjekte (21) auf einen Zielcomputer übertragen werden, auf dem sie zur Darstellung einer dem Dokument (1) entsprechenden Dokumentkopie in einer von einem Ziel-Browserprogramm erzeugten Ziel-Browser-Darstellungseinheit (4') dargestellt werden.

12. Verfahren nach Anspruch 11, bei dem die in der Datenstruktur (3) erfassten Darstellungsobjekte (21) und die erfassten Änderungen der Darstellungsobjekte (21) vor dem Übertragen auf den Zielcomputer in einem Pufferspeicher zwischengespeichert werden.

13. Verfahren nach Anspruch 11 oder 12, bei dem ein Dokumentkopieobjektmodell überwacht wird, indem es bei einem bestimmten Ereignis auf Änderungen seiner Darstellungsobjekte geprüft wird, so dass Änderungen der Zieldarstellungsobjekte des Dokumentkopieobjektmodells, die für die Darstellung der Dokumentkopie in der Ziel-Browser-Darstellungseinheit (4') relevant sind, erfasst und auf den Quellcomputer übertragen werden.

14. Verfahren nach einem der Ansprüche 11 bis 13, bei dem eine aus dem in der Browser-Darstellungseinheit (4) dargestellten Dokument erzeugte Übertragungsanfrage und deren Antwort erfasst werden, wobei die Antwort für eine entsprechende aus der in der Ziel-Browser-Darstellungseinheit (4') dargestellten Dokumentkopie erzeugte Übertragungsanfrage verwendet wird.

15. Computerprogramm, umfassend Befehle, die bei der Ausführung des Programms durch einen Computer diesen veranlassen, das Verfahren nach einem der vorhergehenden Ansprüche auszuführen.

16. Kommunikationsvorrichtung, die Mittel zur Durchführung des Verfahrens nach einem der Ansprüche 1 bis 14 umfasst.

## Claims

1. A method for capturing the display of at least one document (1) displayed in at least one browser display unit (4), the browser display unit (4) being generated by a browser program executed on a source computer and the browser program generating a document object model (2) as interface for accessing the document (1) displayed in the browser display unit (4), **characterised in that** display objects (21) of the document object model (2) which are relevant to the display of the document (1) in the browser display unit (4) are at least partially captured in a predefined, tree-like data structure (3) comprising nodes having attributes and an organized list of child nodes having corresponding attributes, wherein other objects that are not display objects (21) of the display object model (2) are specifically not captured in the data structure (3), and **in that** the document object model (2) is monitored such that changes to the display objects (21) of the document object model (2) are captured.

2. The method according to claim 1, wherein the document object model (2) is monitored by being checked periodically for changes to the display objects (21) thereof.

3. The method according to claim 1 or 2, wherein the document object model (2) is monitored by being checked for changes to the display objects (21) thereof in the case of a specific event.

4. The method according to any one of the preceding claims, wherein before a transmission to the source computer, a document control is added to the document (1) for capturing the display objects (21) of the document object model (2) and monitoring the document object model (2).

5. The method according to claim 4, wherein before a transmission to the source computer, the document control is automatically added to the document (1) by a proxy service (51).

6. The method according to claim 4 or 5, wherein the browser program comprises a script interpretation unit and the document control consists entirely of script commands that can be executed by the script interpretation unit.

7. The method according to any one of the preceding claims, wherein the changes to the display objects (21) of the document object model (2) are captured incrementally.

8. The method according to any one of the preceding claims, wherein the captured data structure (3) is transmitted to an additional computer and stored thereon.

9. The method according to claim 8, wherein the changes to the display objects (21) of the document object model (2) are incrementally captured from data structures (3) captured at different points in time and are stored on the additional computer.

10. The method according to claim 8 or 9, wherein a first data structure (3) of a first document (1) is captured at a first point in time and a second data structure of a second document is captured at a second point in time, wherein the differences between the first data structure (3) and the second data structure are incrementally captured and stored on the additional computer.

11. The method according to any one of the preceding claims, wherein the display objects (21) captured in the data structure (3) and the captured changes to the display objects (21) are transmitted to a target computer on which they are displayed in order to display a document copy corresponding to the document (1) in a target browser display unit (4') generated by a target browser program.

12. The method according to claim 11, wherein the display objects (21) captured in the data structure (3) and the captured changes to the display objects (21) are buffered in a buffer memory before being transmitted to the target computer.

13. The method according to claim 11 or 12, wherein a document copy object model is monitored by being checked for changes to the display objects thereof in the case of a specific event so that changes to the target display objects of the document copy object model that are relevant to the display of the document copy in the target browser display unit (4') are captured and transmitted to the source computer.

14. The method according to any one of claims 11 to 13, wherein a transmission request generated from the document displayed in the browser display unit (4) and the response thereto are captured, wherein the response is used for a corresponding transmission request generated from the document copy displayed in the target browser display unit (4').

15. A computer program comprising commands which, when the program is executed by a computer, prompt said computer to execute the method according to any one of the preceding claims.

16. A communication device comprising means for carrying out the method according to any of claims 1 to 14.

## Revendications

1. Procédé destiné à saisir la représentation d'au moins un document (1) représenté dans au moins une unité de représentation de navigateur (4), dans lequel l'unité de représentation de navigateur (4) est générée par un programme de navigateur exécuté sur un ordinateur source et le programme de navigateur génère un modèle d'objet document (2) en tant qu'interface pour accéder au document (1) représenté dans l'unité de représentation de navigateur (4), **caractérisé en ce que** des objets de représentation (21) du modèle d'objet document (2), qui sont significatifs pour la représentation du document (1) dans l'unité de représentation de navigateur (4), sont saisis au moins partiellement dans une structure de données prédéfinie (3), construite selon une structure arborescente, qui comprend des noeuds avec des attributs et une liste ordonnée de noeuds enfants avec des attributs correspondants, dans lequel d'autres objets, qui ne sont pas les objets de représentation (21) du modèle d'objet document (2), ne sont pas saisis de manière ciblée dans la structure de données (3) et **en ce que** le modèle d'objet document (2) est surveillé afin de saisir des modifications des objets de représentation (21) du modèle d'objet document (2).

2. Procédé selon la revendication 1, dans lequel le modèle d'objet document (2) est surveillé en ce que ses objets de représentation (21) sont vérifiés périodiquement à la recherche de modifications.

3. Procédé selon la revendication 1 ou 2, dans lequel le modèle d'objet document (2) est surveillé en ce que ses objets de représentation (21) sont vérifiés lors d'un événement précis à la recherche de modifications.

4. Procédé selon l'une quelconque des revendications précédentes, dans lequel le document (1) est développé avant la transmission à l'ordinateur source avec une commande de document pour la saisie des objets de représentation (21) du modèle d'objet document (2) et pour la surveillance du modèle d'objet document (2).

5. Procédé selon la revendication 4, dans lequel le document (1) est développé de manière automatisée avec une commande de document avant une transmission à l'ordinateur source d'un service mandataire (51).

6. Procédé selon la revendication 4 ou 5, dans lequel le programme de navigateur présente une unité d'interprétation de script et la commande de document est entièrement constituée d'instructions de script pouvant être exécutées par l'unité d'interprétation de script.

7. Procédé selon l'une quelconque des revendications précédentes, dans lequel les modifications des objets de représentation (21) du modèle d'objet document (2) sont saisies de manière incrémentielle.

8. Procédé selon l'une quelconque des revendications précédentes, dans lequel la structure de données saisie (3) est transmise à un autre ordinateur et mémorisée sur celui-ci.

9. Procédé selon la revendication 8, dans lequel les modifications des objets de représentation (21) du modèle d'objet document (2) sont saisies de manière incrémentielle à partir de structures de données (3) saisies à différents instants et sont mémorisées sur l'autre ordinateur.

10. Procédé selon la revendication 8 ou 9, dans lequel, à un premier instant, une première structure de données (3) est saisie dans un premier document (1) et, à un deuxième instant, une deuxième structure de données est saisies dans un deuxième document, les différences entre la première structure de données (3) et la deuxième structure de données étant saisies de manière incrémentielle et mémorisées sur l'autre ordinateur.

11. Procédé selon l'une quelconque des revendications précédentes, dans lequel les objets de représentation (21) saisis dans la structure de données (3) et les modifications saisies des objets de représentation (21) sont transmis à un ordinateur cible, sur lequel ils sont représentés pour la représentation d'une copie de document correspondant au document (1) dans une unité de représentation de navigateur cible (4') générée par un programme de navigateur cible.

12. Procédé selon la revendication 11, dans lequel les objets de représentation (21) saisis dans la structure de données (3) et les modifications saisies des objets de représentation (21) sont mémorisés de façon intermédiaire dans une mémoire tampon avant la transmission à l'ordinateur cible.

13. Procédé selon la revendication 11 ou 12, dans lequel un modèle d'objet copie de document est surveillé, en ce que ses objets de représentation sont vérifiés lors d'un événement précis à la recherche de modifications, de sorte que les modifications des objets de représentation cibles du modèle d'objet copie de document, qui sont significatives pour la représentation de la copie de document dans l'unité de représentation de navigateur cible (4'), soient saisies et à l'ordinateur source.

14. Procédé selon l'une quelconque des revendications 11 à 13, dans lequel une question de transmission générée à partir du document représenté dans l'unité de représentation de navigateur (4) et sa réponse sont saisies, dans lequel la réponse à une question de transmission correspondante générée à partir de la copie de document représentée dans l'unité de représentation de navigateur cible (4') est utilisée.

15. Programme informatique, comprenant des instructions qui, lorsque le programme est exécuté par un ordinateur, permettent de réaliser le procédé selon l'une quelconque des revendications précédentes.

16. Dispositif de communication, qui comprend des moyens pour la réalisation du procédé selon l'une quelconque des revendications 1 à 14.
